# EUROPÄISCHE PATENTSCHRIFT

(11) **EP 0 626 742 B1**
(45) Veröffentlichungstag und Bekanntmachung des Hinweises auf die Patenterteilung: **29.01.1997**
(21) Anmeldenummer: 94105498.3
(22) Anmeldetag: 08.04.1994
(51) Int. Cl.: H02G 15/18, B29C 61/06, C09J 7/00

(54) **Wärmeschrumpfbare Kabelmuffe**
Heatshrinkable cable sleeve
Manchon de câble thermorétractable

(30) Priorität: 20.04.1993 DE 4312890
(43) Veröffentlichungstag der Anmeldung: 30.11.1994
(73) Patentinhaber: RXS Kabelgarnituren Gesellschaft mit beschränkter Haftung, D-58093 Hagen (DE)
(72) Erfinder: Böttcher, Bodo, D-58644 Iserlohn (DE)
(74) Vertreter: Fuchs, Franz-Josef, Dr.-Ing.

(56) Entgegenhaltungen:
- EP-A- 0 079 245
- EP-A- 0 223 044
- EP-A- 0 323 914
- EP-A- 0 330 480
- EP-A- 0 423 549
- DE-A- 3 150 909
- GB-A- 2 250 513
- US-A- 3 957 382

## Beschreibung

Die Erfindung betrifft eine wärmeschrumpfbare Kabelmuffe mit einer Füllmasse, wobei ein Füllkleber mit rheologischen Eigenschaften auf der Basis von Heißschmelzklebern im Inneren der Kabelmuffe angeordnet ist, dessen Erweichungspunkt ≥ 85° C ist.

Es ist in der Kabeltechnik allgemein bekannt, daß Kabel mit entsprechenden Füllmassen versehen werden, die verhindern, daß sich Feuchtigkeit insbesondere bei Beschädigungen des Kabelmantels in Längsrichtung ausbreiten kann. So werden beispielsweise Sperrstopfen aus quellbaren oder aufschäumbaren Substanzen erstellt, durch die ein weiteres Vordringen von Feuchtigkeit vermieden wird. Weiterhin werden in diesem Zusammenhang auch die Kabel mit entsprechenden Kunststoffmassen zwischen den einzelnen Kabeladern gefüllt, zum Beispiel mit einer Masse, die als Petrolat bezeichnet wird, wie aus der britischen Patentschrift 987 508 hervorgeht. Hier besteht jedoch die Gefahr, daß die Masse, insbesondere bei Erwärmung ausläuft, so daß dann die Wirkung nicht mehr gegeben ist. Weiterhin ist bekannt, einen viskosen Stoff zu verwenden, dem kleine Hohlkörperchen beigemengt sind. Diese Hohlkörperchen lassen sich unter dem Einfluß von Kräften zusammendrücken und expandieren wieder, wenn die Kräfte nicht mehr vorhanden sind. Hier sind diese Eigenschaften besonders beim Füllvorgang wichtig. Eine solche Füllsubstanz wird in der deutschen Patentschrift 31 50 909 beschrieben. Bei Kabelgarnituren ergeben sich ähnliche Probleme, doch ist hier der Einsatz der oben beschriebenen Massen und Substanzen in vieler Hinsicht problematisch. Außerdem ist der Umgang mit fließenden Werkstoffen in Kabelmuffen sehr schwierig, da insbesondere bei schrumpfbaren Kabelmuffen zunächst kein geschlossener Aufnahmeraum für diese fließenden Füllmittel zur Verfügung steht.

Aus EP-A- 0 330 480 ist eine wärmeschrumpfbare Kabelmuffe mit einer Füllmasse bekannt, wobei diese Füllmasse aus einem Füllkleber auf der Basis von Heißschmelzklebern besteht und der im Inneren der Kabelmuffe angeordnet ist. Der Erweichungspunkt dieses Füllklebers liegt bei ≥ 85° C.

Dieser Erfindung liegt nun die Aufgabe zugrunde, eine Kabelmuffe mit einer geeigneten Füllung zu schaffen, bei der die vorgenannten Nachteile und Schwierigkeiten nicht auftreten. Die gestellte Aufgabe wird nun mit einer wärmeschrumpfbaren Kabelmuffe der eingangs erläuterten Art dadurch gelöst, daß Mikrohohlkörper im Füllkleber eingelagert sind und das Volumen des gesamten Füllklebers durch Vergrößerung des Volumens der Mikrohohlkörper bei Erwärmung auf eine Temperatur von mindestens 100° C um mindestens 25 vol. % vergrößerbar ist.

Ein Vorteil der Erfindung gegenüber dem Stand der Technik ist in erster Linie darin zu sehen, daß es sich bei einer solchen gefüllten Kabelmuffe um ein zunächst festes Füllmittel handelt, das dann bei Wärmezufuhr so verformbar wird, daß es durch die Kräfte der später schrumpfenden Kabelmuffe in alle Hohlräume der inneren Einbauten der Kabelmuffe eingepreßt wird und daß das Füllmittel dann wieder fest wird. Es besteht also keine Gefahr, daß das Füllmaterial ausläuft, wie es bisher immer wieder sein konnte. Dieser Effekt wird jedoch noch zusätzlich unterstützt durch die besondere Zusammensetzung des Füllmittels, das aus einem Füllkleber mit rheologischen, insbesondere thixotropen Eigenschaften auf der Basis eines Heißschmelzklebers (hot-melt) besteht, dem expandierende Mikrohohlkörper beigemengt sind. Dieses Füllmittel wird nun um die Einrichtungen herum innerhalb der Kabelmuffe angeordnet, als Granulat, in Form eines Wickelbandes oder einer wickelbaren, die gesamte Spleißstelle umfassende Fläche und zwar in der Menge, die ausreicht, im verformbaren Zustand alle Hohlräume der Kabelmuffe auszufüllen, wobei zu berücksichtigen ist, daß die Kabelmuffe bei Wärmezufuhr schrumpft und nach Durchwärmung des Füllmittels dieses entsprechend verteilt und verpreßt. Hierfür wird vorzugsweise eine Kabelmuffe mit einer Verstärkungseinlage verwendet, insbesondere mit Einlagen aus Glasfasern, die in Gitter-, Gewebe- oder Gewirkeform eingebettet sind. Es können jedoch auch noch zusätzlich schrumpfende Fasern im Material der Kabelmuffe eingelagert sein, die die Schrumpfwirkung bewirken oder zumindest unterstützen. Die Einlagen aus wärmeschrumpfenden Fasermaterialien müssen dabei in ihrer Ausdehnungsrichtung quer zur Schrumpfrichtung verlaufen, um die Schrumpfung nicht zu beeinflussen. Zumindest muß die Anordnung dieser wärmebeständigen Fasermaterialien so getroffen werden, daß der Bewegungsablauf der schrumpfenden Kabelmuffe möglichst nicht behindert wird. Bei der Montage wird die Kabelmuffe um die mit Füllkleber beaufschlagte Stelle, zum Beispiel eine Kabelabzweigung, herum installiert. Bei der durch die Schrumpfung bedingten Zuführung von Wärme wird auch der Füllkleber verformbar, so daß er aufgrund seiner rheologischen Eigenschaften in alle Hohlräume eindringen kann. Hierbei werden nicht nur die Schrumpfkräfte der Kabelmuffe, vorzugsweise in Manschettenform, ausgenutzt, sondern auch die Expansion der im Füllkleber befindlichen Mikrohohlkörper. Beide Kräfte, die Schrumpfkräfte der Manschette und die Expansion des Füllklebers reichen aus, um die Inneneinrichtungen der Kabelmuffe vollkommen gegen Umwelteinflüsse abzuschließen. Die Gesamtexpansion des Füllklebers resultiert jedoch im wesentlichen aus der Expansionsfähigkeit der Mikrohohlkörper bei Wärmezufuhr.

Es wird bei der Kabelmuffe gemäß der Erfindung ein Füllkleber mit rheologischen Eigenschaften auf der Basis von Heißschmelzklebern verwendet, die einen Erweichungspunkt von größer bzw. gleich 85° C haben. Außerdem ist dieser Füllkleber mit expandierenden Mikrohohlkörpern ausgerüstet, die aus einem bei einer Temperatur von mindestens 85° verformbaren oder zähplastischen Material, insbesondere aus einem Thermoplasten, einem Thermoelasten oder einem Elastomeren bestehen, z.B. aus einem Polyvinylidenchlorid-Acrylnitril-Copolymer. Die Mikrohohlkörper haben im Mittel vorzugsweise einen Durchmesser von 22 µm und eine Wanddicke von ca. 0,6 µm. Die expandierenden Mikrohohlkörper sind so zusammengestellt und dimensioniert, daß sie das Volumen des gesamten Füllklebers bei Erwärmung auf ≧ 100° C um mindestens 25 Vol % vergrößern. Der Füllkleber selbst hat im festen Zustand beispielsweise eine Festigkeit, die einer Nagelpenetration mit einer Nadel von 0,1 mm Durchmesser nach DIN ASTM 5-86 ≧ 30, vorzugsweise 40 bis 60, entspricht. Die Viskosität des Füllklebers muß jedoch bei 100° C mindestens einen Wert von 10⁴ mPs, vorzugsweise von 1,3 × 10⁴ mPs bis 5 × 10⁴ mPs, aufweisen. Als Füllmittel kann auch der Haftklebstoff Macromelt CF 413 der Firma Henkel verwendet werden.

Außerdem kann die Manschette selbst oder das Füllmittel mit einem außen sichtbaren Temperaturindikator versehen sein, damit festgestellt werden kann, wann und ob das Füllmittel die erforderliche Temperatur und damit die erforderliche Viskosität zum Füllen der Hohlräume aufweist. So kann dieser Temperaturindikator zum Beispiel aus einer Perle aus schmelzbarem Material bestehen, wobei der Schmelzpunkt dieses Materials der Reaktionstemperatur des Füllmittels entsprechen muß, das ist zum Beispiel eine Temperatur von mindestens 105° C auf der Oberfläche der Kabelmuffe, wenn die oben genannten Mittel verwendet werden. Ein solcher Temperaturindikator kann zum Beispiel aus einer Erhöhung, aus einem schmelzbaren Material auf dem eingebrachten Füllmittel bestehen, die zunächst beim Aufschrumpfen der Kabelmuffe außen deutlich in Erscheinung tritt, die aber bei ausreichender Erwärmung schmilzt und sich einebnet. Dieses Verschwinden der Erhöhung zeigt dann an, daß die erforderliche Temperatur im Inneren erreicht ist. Ein solches Material kann zum Beispiel ebenfalls Schmelzkleber oder Polystyrol sein.

Eine solche Kabelmuffe kann nun auch als Abzweigmuffe verwendet werden, wobei dann die an sich bekannten Mittel zum Bilden eines Abzweiges verwendet werden können. So werden dann die Wandungen der Kabelmuffe im Zwickelbereich zwischen den abzweigenden Kabeln mit Klemmitteln, zum Beispiel mit Klammern, zusammengehalten, damit in diesem Bereich eine Abdichtung zustande kommt. Im Prinzip kann eine solche Kabelmuffe bei allen Anwendungsmöglichkeiten eingesetzt werden, doch eignet sie sich auch besonders als Abzweigmuffe bei der Herstelung von Abzweigen bei Versorgungskabeln. Hier wird am ungeschnittenen Hauptkabel mit Hilfe eines Kompaktklemmringes die Abzweigung geschaffen. Die Abdichtung erfolgt dann mit Hilfe des Füllmittels gemäß der Erfindung und der aufgeschumpften Kabelmuffe.

Hier wird auch besonders der Unterschied zum Stand der Technik deutlich; denn dort wird bisher dieser Kompaktklemmring mit einem Verguß aus einem Polyurethan-Harz (PUR - Harz) gegen die Umwelteinflüsse abgedichtet. Polyurethan-Harze wurden deswegen gewählt, weil dieses Gießharz sämtliche Hohlräume des Verbinders und des Kabelinnenzwickels vollkommen ausfüllt und dadurch die Abdichtung bewirkt, wobei diese Harze den thermischen Ausdehnungen des Kabelmaterials weitgehend folgt. Die Nachteile dieser Harze sind jedoch die beschränkte Lagerfähigkeit, keit, der Einsatz des Harzes nur bei Umgebungstemperaturen oberhalb 5° C, die Mischung der beiden Harzkomponenten am Montageort durch den Monteur und dann die bekannten Umweltprobleme, die die Härterkomponenten des Harzes mit sich bringen. Diese Nachteile treten beim vorliegenden Füllmittel gemäß der Erfindung nicht auf.

Die Erfindung wird nun anhand von fünf Figuren näher erläutert.
- Figur 1: zeigt eine Abzweigvorrichtung bei Versorgungsleitungen, die von der erfindungsgemäßen Kabelmuffe umgeben werden kann.
- Figur 2: zeigt die Anordnung des Füllmittels in Wickelbandform.
- Figur 3: zeigt den Aufbau des Füllmittels gemäß der Erfindung.
- Figur 4: zeigt die Verwendung eines Füllmittels in Flächenform.
- Figur 5: zeigt eine fertig geschrumpfte Abzweigmuffe an Versorgungsleitungen.

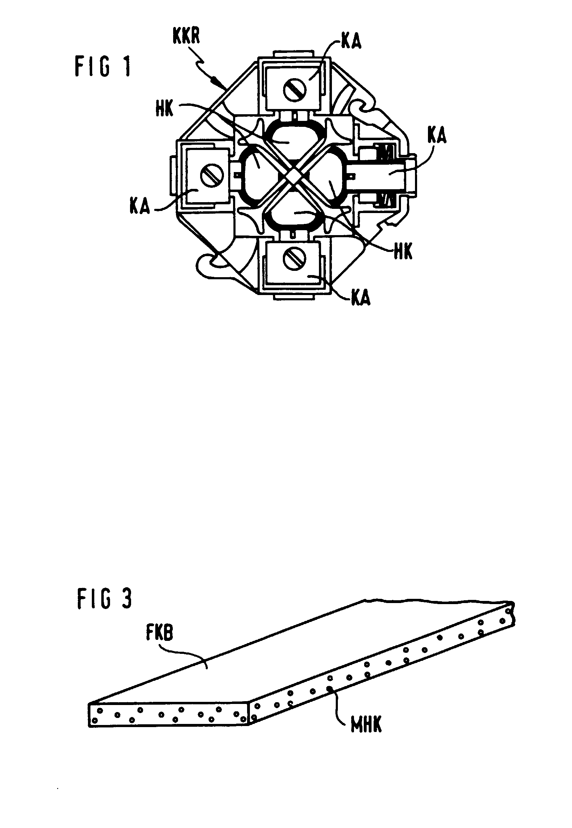

Die Figur 1 zeigt einen Kompaktklemmring KKR, mit dem ein Abzweigkabel AK mit seinen einzelnen Strängen an den Kabelanschlüssen KA angeschlossen werden kann. Der Kompaktklemmring KKR ist auf dem ungeschnittenen Hauptkabel HK aufgesetzt und die jeweiligen Anschlüsse werden mit Hilfe von Frässchrauben, die die Isolierung durchdringen, hergestellt. Diese Anordnung wird dann mit dem erfindungsgemäßen Füllmittel umhüllt, das zum Beispiel in Form eines Wickelbandes verwendet wird.

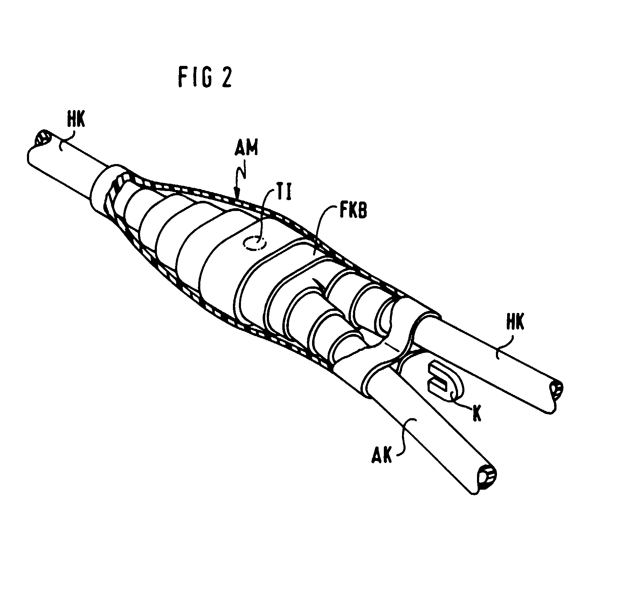

Die Figur 2 vermittelt die Kabelmuffenanordnung einer Abzweigmuffe AM im noch ungeschrumpften, sonst jedoch bereits fertigmontierten Zustand. Daraus wird ersichtlich, daß der Kompaktklemmring nach Figur 1, oder auch jede andere Vorrichtung wie zum Beispiel ein Kabelspleiß, bereits vom Füllmittel gemäß der Erfindung umgeben ist, wobei hier die Form eines Füllkleber-Wickelbandes FKB gewählt ist. Die Erwärmung hat hier noch nicht stattgefunden, so daß die Struktur des Füllkleberwickelbandes FKB noch erhalten ist. Durch die Abzweigmuffe hindurch verläuft das ungeschnittene Hauptkabel HK, an dem ein Abzweigkabel AK angeklemmt ist. Im Zwickelbereich zwischen den beiden Kabeln HK und AK im abgehenden Bereich ist die Abzweigmuffe AM mit Hilfe eines Klemmittels in Form einer U-förmigen Klammer K zusammengedrückt, so daß die Wandungen der Abzweigmuffe AM beim Schrumpfvorgang nicht voneinander abheben können. Außerdem ist angedeutet, daß auf dem Füllkleberwickelband FKB ein Temperaturindikator TI in Form einer Erhöhung aus schmelzbarem Material angeordnet ist, dessen Wirkung oben bereits beschrieben worden ist. Im geschrumpften Zustand wird der durch den Wärmeeinfluß beim Schrumpfen geschmolzene und dann wieder erkaltete Füllkleber alle Hohlräume ausfüllen, wobei die oben bereits geschilderten Wirkungen in Bezug auf die Expandierung der Mikrohohlkörper ausschlaggebend sind.

Die Kabelmuffe kann auf ihrer Innenseite (Kleberseite) mit einer Aluminiumfolie versehen sein, die zur Schirmung der Verbindungsstelle dient. Dies ist zum Beispiel besonders wichtig, wenn die Kabelmuffe an Ceander-Kabeln installiert wird.

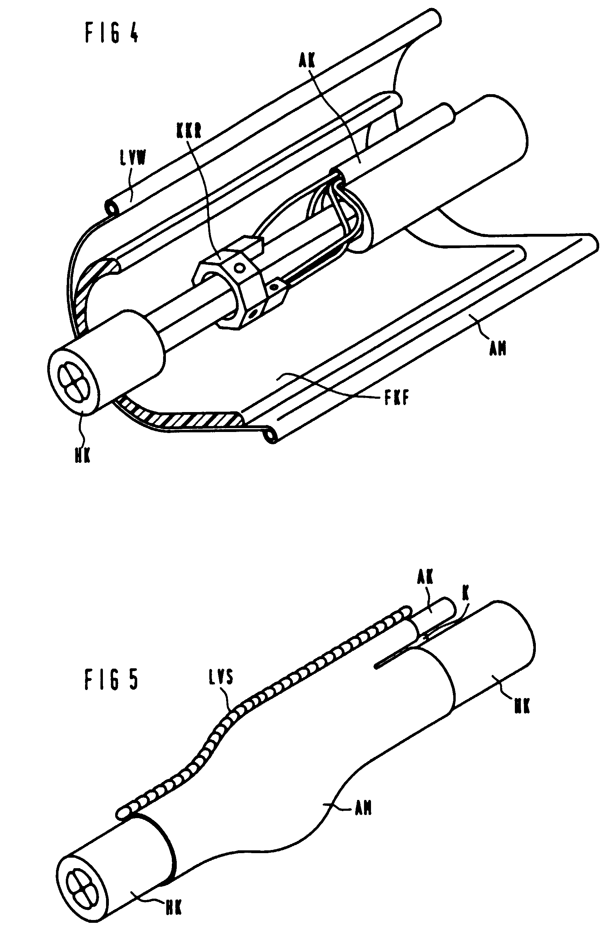

Die Figur 3 vermittelt in schematischer Form die Ausbildung eines Füllkleberwickelbandes FKB mit den eingelagerten Mikrohohlkörpern MHK, wobei der Aufbau in jeder Einsatzform gleich ist.

Figur 4 zeigt eine Abzweigstelle bei der am Hauptkabel HK mit Hilfe eines Kompaktklemmringes KKR ein Abzweigkabel AK abgezweigt wird. Diese Abzweigstelle wird mit einer schrumpfbaren Abzweigmuffe AM umhüllt und entlang der mit Längsverschlußwülsten LVW versehenen Trennlinie verschlossen. Im Inneren der Abzweigmuffe AM ist hier beispielsweise ein erfindungsgemäßes Füllmittel in Form einer wickelbaren Fläche FKF angeordnet, das bei Erwärmung die gleichen rheologischen Eigenschaften aufweist, wie die vorher beschriebenen Ausführungsbeispiele.

Die Figur 5 zeigt die fertig geschrumpfte Abzweigmuffe AM, bei der an der einen Stirnseite das Hauptkabel HK eingeführt wird. An der anderen Stirnseite werden das Hauptkabel HK und das Abzweigkabel AK ausgeführt, wobei dazwischen eine Klammer K angeordnet ist, durch die die Wandung der Abzweigmuffe AM zusammengehalten werden. Entlang der Längsverschlußwülste LVW ist eine Längsverschlußschiene LVS aufgezogen.

## Patentansprüche

1. Wärmeschrumpfbare Kabelmuffe mit einer Füllmasse, wobei ein Füllkleber (FBK, FKF) mit rheologischen Eigenschaften auf der Basis von Heißschmelzklebern im Inneren der Kabelmuffe (AM) angeordnet ist, dessen Erweichungspunkt ≥ 85° C ist,
**dadurch gekennzeichnet,**
daß Mikrohohlkörper (MHK) im Füllkleber (FKB, FKF) eingelagert sind und daß das Volumen des gesamten Füllklebers durch Vergrößerung des Volumens der Mikrohohlkörper (MHK) bei Erwärmung auf eine Temperatur von mindestens 100° C um mindestens 25 vol. % vergrößerbar ist.

2. Wärmeschrumpfbare Kabelmuffe nach Anspruch 1,
**dadurch gekennzeichnet**,
daß die Viskosität des Füllklebers (FKB, FKF) bei einer Temperatur von 100° C mindestens 10⁴ mPs, vorzugsweise 1,3 × 10⁴ mPs, beträgt.

3. Wärmeschrumpfbare Kabelmuffe nach einem der vorhergehenden Ansprüche,
**dadurch gekennzeichnet,**
daß die Mikrohohlkörper (NHK) aus einem bei einer Temperatur von mindestens 85° C verformbaren oder zähelastischem Material, insbesondere aus einem Thermoplasten, einem Thermoelasten oder einem Elastomeren, bestehen.

4. Wärmeschrumpfbare Kabelmuffe nach Anspruch 3,
**dadurch gekennzeichnet,**
daß die Mikrohohlkörper (MHK) aus einem Polyvinylidenchlorid-Acrylnitril-Copolymer bestehen.

5. Wärmeschrumpfbare Kabelmuffe nach einem der vorhergehenden Ansprüche,
**dadurch gekennzeichnet,**
daß die Mikrohohlkörper (MHK) im Mittel einen Durchmesser in der Größenordnung von 22 µm und eine Wanddicke in der Größenordnung von etwa 0,6 µm aufweisen.

6. Wärmeschrumpfbare Kabelmuffe nach einem der vorhergehenden Ansprüche,
**dadurch gekennzeichnet,**
daß sie in ihrer Wandung Verstärkungseinlagen aufweist.

7. Wärmeschrumpfbare Kabelmuffe nach Anspruch 6,
**dadurch gekennzeichnet,**
daß die Verstärkungseinlagen zumindest in Ausdehnungsrichtung quer zur Schrumpfrichtung aus wärmebeständigen Fasermaterialien bestehen, vorzugsweise aus Glasfasern.

8. Wärmeschrumpfbare Kabelmuffe nach Anspruch 6,
**dadurch gekennzeichnet,**
daß die Verstärkungseinlagen als Gitter, Gewirke oder Gewebe ausgebildet sind.

9. Kabelmuffe nach einem der vorhergehenden Ansprüche,
**dadurch gekennzeichnet,**
daß sie in ihrer Wandung in Schrumpfrichtung wirkende, wärmeschrumpfbare Fasern enthält.

10. Wärmeschrumpfbare Kabelmuffe nach einem der vorhergehenden Ansprüche,
**dadurch gekennzeichnet,**
daß sie als Abzweigmuffe (AM) verwendbar ist und im Zwickel zwischen den abzweigenden Kabeln (HK, AK) Klemmittel, vorzugsweise Klammern (K), aufweist.

11. Wärmeschrumpfbare Kabelmuffe nach einem der vorhergehenden Ansprüche,
**dadurch gekennzeichnet,**
daß sie an Versorgungskabeln als Abzweigmuffe (AM) eingesetzt ist, daß das Abzweigkabel (AK) vom ungeschnittenen Hauptkabel (HK) mittels eines Kompaktklemmringes (KKR) abgezweigt ist, daß der Kabelmuffenhohlraum um die Abzweigung herum mit dem Füllkleber (FKB, FKF) und den darin eingelagerten Mikrohohlkörpern (MHK) gefüllt ist, daß sie mit dem Klemmittel (K) im Zwickelbereich zusammengehalten ist und durch Wärmezufuhr aufschrumpfbar ist, wobei durch die Wärmezufuhr das gesamte Füllmittel verformbar wird und in die Hohlräume einpreßbar ist.

12. Wärmeschrumpfbare Kabelmuffe nach einem der vorhergehenden Ansprüche,
**dadurch gekennzeichnet,**
daß der Füllkleber mit den eingelagerten Mikrohohlkörpern (MHK) in Granulatform hergestellt ist.

13. Wärmeschrumpfbare Kabelmuffe nach einem der Ansprüche 1 bis 11,
**dadurch gekennzeichnet,**
daß der Füllkleber (FKB) mit den eingelagerten Mikrohohlkörpern (MHK) in Wickelbandform hergestellt ist.

14. Wärmeschrumpfbare Kabelmuffe nach einem der vorhergehenden Ansprüche,
**dadurch gekennzeichnet,**
daß der Füllkleber mit Mikrohohlkörpern im festen Zustand eine Festigkeit aufweist, die einer Nadelpenetration (Nadeldurchmesser 0,1 mm) nach DIN ASTM 5-86 ≥ 30, vorzugsweise 40 bis 60, entspricht.

15. Wärmeschrumpfbare Kabelmuffe nach einem der vorhergehenden Ansprüche,
**dadurch gekennzeichnet,**
daß ein Temperaturindikator (TI) zur Messung der Füllklebertemperatur innerhalb der Kabelmuffe angeordnet ist.

16. Wärmeschrumpfbare Kabelmuffe nach Anspruch 15,
**dadurch gekennzeichnet,**
daß der Temperaturindikator (TI) aus einem bei Reaktionstemperatur des Füllklebers schmelzbaren Material besteht, das als Erhöhung auf der Füllklebereinlage angeordnet ist, beim Aufschrumpfen der Kabelmuffenwandung außerhalb sichtbar ist und bei Erreichen einer Reaktionstemperatur von mindestens 105° C auf der Oberfläche der Kabelmuffe eingeebnet wird.

17. Wärmeschrumpfbare Kabelmuffe nach Anspruch 16,
**dadurch gekennzeichnet,**
daß das schmelzbare Material eine Schmelzkleberperle, insbesondere aus dem Material des Füllklebers, ist.

18. Wärmeschrumpfbare Kabelmuffe nach Anspruch 16,
**dadurch gekennzeichnet,**
daß das schmelzbare Material Polystyrol ist.

19. Wärmeschrumpfbare Kabelmuffe nach einem der vorhergehenden Ansprüche,
**dadurch gekennzeichnet,**
daß eine Schirmung, insbesondere in Form einer Aluminiumfolie, auf der Innenseite der Kabelmuffe angeordnet ist.

20. Wärmeschrumpfbare Kabellmuffe nach einem der vorhergehenden Ansprüche,
**dadurch gekennzeichnet,**
daß der Fülkleber (FKB, FKF) thixotrope Eigenschaften aufweist.

21. Wärmeschrumpfbare Kabelmuffe nach einem der Ansprüche 1 bis 11 oder 14 bis 20,
**dadurch gekennzeichnet,**
daß der Füllkleber (FKF) in Flächenform die gesamte Länge der Spleißstelle umfaßt.

## Claims

1. Heat-shrinkable cable sleeve having a filling composition, there being arranged in the interior of the cable sleeve (AM) a filling adhesive (FBK, FKF) with rheological properties which is based on hot-melt adhesives and the softening point of which is ≥ 85°C, characterized in that hollow microelements (MHK) are incorporated in the filling adhesive (FKB, FKF) and in that the volume of the complete filling adhesive can be enlarged by at least 25% by volume by enlarging the volume of the hollow microelements (MHK) by heating to a temperature of at least 100 °C.

2. Heat-shrinkable cable sleeve according to Claim 1, characterized in that the viscosity of the filling adhesive (FKB, FKF) at a temperature of 100°C is at least 10⁴ mPs, preferably 1.3 x 10⁴ mPs.

3. Heat-shrinkable cable sleeve according to one of the preceding claims, characterized in that the hollow microelements (MHK) consist of a material which is deformable or viscoplastic at a temperature of at least 85°C, in particular of a thermoplastic, a thermoelastic or an elastomer.

4. Heat-shrinkable cable sleeve according to Claim 3, characterized in that the hollow microelements (MHK) consist of a polyvinylidene chloride/acrylonitryl copolymer.

5. Heat-shrinkable cable sleeve according to one of the preceding claims, characterized in that the hollow microelements (MKH) have on average a diameter of the order of magnitude of 22µm and a wall thickness of the order of magnitude of about 0.6 µm.

6. Heat-shrinkable cable sleeve according to one of the preceding claims, characterized in that it has reinforcing inserts in its walling.

7. Heat-shrinkable cable sleeve according to Claim 6, characterized in that the reinforcing inserts, at least in the direction of extent transversely to the direction of shrinkage, consist of heat-resistant fibre materials, preferably of glass fibres.

8. Heat-shrinkable cable sleeve according to Claim 6, characterized in that the reinforcing inserts are formed as lattices, knitted or woven fabrics.

9. Heat-shrinkable cable sleeve according to one of the preceding claims, characterized in that it contains in its walling heat-shrinkable fibres acting in the direction of shrinkage.

10. Heat-shrinkable cable sleeve according to one of the preceding claims, characterized in that it can be used as a branching sleeve (AM) and has clamping means, preferably clips (K) in the interstice between the branching cables (HK, AK).

11. Heat-shrinkable cable sleeve according to one of the preceding claims, characterized in that it is used on supply cables as a branching sleeve (AM), in that the branching cable (AK) is branched from the uncut main cable (HK) by means of a compact clamping ring (KKR), in that the cable sleeve cavity is filled around the branch with the filling adhesive (FKB, FKF) and the hollow microelements (MHK) incorporated therein, in that it is held together in the interstitial region by the clamping means (K) and can be shrunk on by supplying heat, the heat supply making the entire filling means become deformable and able to be pressed into the cavities.

12. Heat-shrinkable cable sleeve according to one of the preceding claims, characterized in that the filling adhesive with the incorporated hollow microelements (MHK) is prepared in granular form.

13. Heat-shrinkable cable sleeve according to one of Claims 1 to 11, characterized in that the filling adhesive (FKB) with the incorporated hollow microelements (MHK) is prepared in the form of a winding tape.

14. Heat-shrinkable cable sleeve according to one of the preceding claims, characterized in that the filling adhesive with hollow microelements has in the solid state a resistance which corresponds to a needle penetration (needle diameter 0.1 mm) in accordance with DIN ASTM 5-86 of ≥ 30, preferably 40 to 60.

15. Heat-shrinkable cable sleeve according to one of the preceding claims, characterized in that a temperature indicator (TI) for measuring the temperature of the filling adhesive is arranged inside the cable sleeve.

16. Heat-shrinkable cable sleeve according to Claim 15, characterized in that the temperature indicator (TI) consists of a material which is meltable at the reaction temperature of the filling adhesive, is arranged as an elevation on the filling adhesive insert, is externally visible during shrinking on of the cable sleeve walling and, on reaching a reaction temperature of at least 105°C, is levelled on the surface of the cable sleeve.

17. Heat-shrinkable cable sleeve according to Claim 16, characterized in that the meltable material is a bead of hot-melt adhesive, in particular of the material of the filling adhesive.

18. Heat-shrinkable cable sleeve according to Claim 16, characterized in that the meltable material is polystyrene.

19. Heat-shrinkable cable sleeve according to one of the preceding claims, characterized in that a screening, in particular in the form of an aluminium foil, is arranged on the inner side of the cable sleeve.

20. Heat-shrinkable cable sleeve according to one of the preceding claims, characterized in that the filling adhesive (FKB, FKF) has thixotropic properties.

21. Heat-shrinkable cable sleeve according to one of Claims 1 to 11 or 14 to 20, characterized in that the filling adhesive (FKF) in sheet-like form covers the entire length of the slice.

## Revendications

1. Manchon de câble thermorétractable comportant une charge, une colle (FBK, FKF) de remplissage (FBK, FKF), ayant des propriétés rhéologiques, à base de colles fusibles à chaud dont la température de ramollissement est supérieure ou égale à 85° C, étant disposée à l'intérieur du manchon de câble, caractérisé en ce que l'on insère des corps (MHK) creux microscopiques dans la colle (FBK, FKF) de remplissage et en ce que, pour un échauffement à une température d'au moins 100° C, on peut agrandir d'au moins 25 % le volume de toute la colle de remplissage en agrandissant le volume des corps (MHK) creux.

2. Manchon de câble thermorétractable suivant la revendication 1, caractérisé en ce que la viscosité de la colle (FBK, FKF) de remplissage est, à une température de 100° C, d'au moins 10⁴ mPs, de préférence de 1,3 x 10⁴ mPs.

3. Manchon de câble thermorétractable suivant l'une des revendications précédentes, caractérisé en ce que les corps (MHK) creux sont en un matériau déformable ou plastique ductile à une température d'au moins 85° C, notamment en un matériau thermoplastique, en un matériau thermoélastique ou en un élastomère.

4. Manchon de câble thermorétractable suivant la revendication 3, caractérisé en ce que les corps (MHK) creux sont en un copolymère poly(chlorure de vinylidène)-acrylonitrile.

5. Manchon de câble thermorétractable suivant l'une des revendications précédentes, caractérisé en ce que les corps (MHK) creux ont en moyenne un diamètre de l'ordre de grandeur de 22 µm et une épaisseur de paroi d'environ 0,6 µm.

6. Manchon de câble thermorétractable suivant l'une des revendications précédentes, caractérisé en ce qu'il comporte des inserts de renfort dans sa paroi.

7. Manchon de câble thermorétractable suivant la revendication 6, caractérisé en ce que les inserts de renfort sont, au moins dans la direction de dilatation, transversalement à la direction de rétraction, en un matériau en fibres résistant à la chaleur, de préférence en fibres de verre.

8. Manchon de câble thermorétractable suivant la revendication 6, caractérisé en ce que les inserts de renfort sont réalisés sous forme réticulaire, sous forme de tissu tissé ou sous forme de tissu maillé.

9. Manchon de câble thermorétractable suivant l'une des revendications précédentes, caractérisé en ce qu'il contient dans sa paroi des fibres thermorétractables agissant dans la direction de rétraction.

10. Manchon de câble thermorétractable suivant l'une des revendications précédentes, caractérisé en ce qu'il peut être utilisé comme manchon (AM) de bifurcation et en ce qu'il comporte dans le gousset, entre les câbles (HK, AK) qui bifurquent, des moyens de serrage, par exemple des agrafes (K).

11. Manchon de câble thermorétractable suivant l'une des revendications précédentes, caractérisé en ce qu'on l'utilise comme manchon (AM) de bifurcation sur des câbles d'alimentation, en ce que l'on fait bifurquer le câble (AK) de bifurcation du câble (HK) principal au moyen d'une bague (KKR) de serrage fort, en que l'on remplit la cavité du manchon de câble autour de la bifurcation de la colle (FKB, FKF) de remplissage et des corps (MHK) creux qui y sont insérés, en ce que on le maintient comprimé dans la partie de gousset par le moyen (K) de serrage et en ce qu'on peut le rétracter en apportant de la chaleur, toute la charge pouvant, par l'apport de chaleur, être déformée et pénétrée dans les alvéoles.

12. Manchon de câble thermorétractable suivant l'une des revendications précédentes, caractérisé en ce que la colle de remplissage comportant les corps (MHK) creux est produite sous forme de granulés.

13. Manchon de câble thermorétractable suivant l'une des revendications 1 à 11, caractérisé en ce que la colle (FKB) de remplissage comportant les corps (MHK) creux est produite sous forme de bande enroulée.

14. Manchon de câble thermorétractable suivant l'une des revendications précédentes, caractérisé en ce que la colle de remplissage comportant des corps creux a, à l'état solide, une résistance qui correspond à une pénétrabilité à l'aiguille (aiguille de 0,1 mm de diamètre) suivant la norme industrielle allemande (DIN) et ASTM 5-86 supérieure ou égale à 30, de préférence de 40 à 60.

15. Manchon de câble thermorétractable suivant l'une des revendications précédentes, caractérisé en ce qu'il est monté un indicateur (TI) de température pour repérer la température de la colle de remplissage à l'intérieur du manchon de câble.

16. Manchon de câble thermorétractable suivant la revendication 15, caractérisé en ce que l'indicateur TI de température est en un matériau fusible à la température de réaction de la colle de remplissage, qui est disposé sous forme de bosse sur l'insert de colle de remplissage, qui est visible extérieurement lorsque la paroi du manchon de câble se rétracte et qui, lorsqu'une température de réaction d'au moins 105° C est atteinte, s'aplanit à la surface du manchon de câble.

17. Manchon de câble thermorétractable suivant la revendication 16, caractérisé en ce que le matériau fusible est une perle de colle fusible, notamment en le même matériau que la colle de remplissage.

18. Manchon de câble thermorétractable suivant la revendication 16, caractérisé en ce que le matériau fusible est du polystyrène.

19. Manchon de câble thermorétractable suivant l'une des revendications précédentes, caractérisé en ce qu'il est disposé un blindage sur la face intérieure du manchon de câble, notamment sous la forme d'une feuille d'aluminium.

20. Manchon de câble thermorétractable suivant l'une des revendications précédentes, caractérisé en ce que la colle (FKB, FKF) de remplissage a des propriétés de thixotropie.

21. Manchon de câble thermorétractable suivant l'une des revendications 1 à 11 ou 14 à 20, caractérisé en ce que la colle (FKB, FKF) de remplissage entoure sous forme de surface toute la longueur du point d'épissure.
